# EUROPEAN PATENT APPLICATION

(11) **EP 4 401 437 A1**
(43) Date of publication of application: **17.07.2024**
(21) Application number: 22882601.2
(22) Date of filing: 27.09.2022
(51) Int. Cl.: H04W 8/20

(54) **COMMUNICATION METHOD AND APPARATUS**

(30) Priority: 22.10.2021 CN 202111235599
(71) Applicant: Huawei Technologies Co., Ltd., Shenzhen, Guangdong 518129 (CN)
(72) Inventor: YU, Youyang, Shenzhen, Guangdong 518129 (CN)
(74) Representative: Körber, Martin Hans
(86) International application number: PCT/CN2022/121710
(87) International publication number: WO 2023/065990

(57) **Abstract**

Embodiments of this application disclose a communication method and apparatus. The method includes: A first data management network element in a first network obtains identification information of a terminal device connected to an access gateway in a second network. The first data management network element obtains, based on the identification information, an access parameter of the terminal device from a second data management network element corresponding to the terminal device in the second network. The first data management network element obtains subscription data of the terminal device based on the access parameter. The first data management network element sends the subscription data of the terminal device to the access gateway.

## Description

This application claims priority to Chinese Patent Application No. 202111235599.3, filed with the China National Intellectual Property Administration on October 22, 2021 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A 5G network architecture defined in the 3rd generation partnership project (3rd generation partnership project, 3GPP) not only supports a terminal device in accessing a 5G core network (5G core network, 5GC) by using a radio technology defined in 3GPP standard groups, for example, long term evolution (long term evolution, LTE) or a 5G radio access network (radio access network, RAN), but also supports the terminal device in accessing the 5GC by using a non-3GPP access technology and a non-3GPP interworking function (non-3GPP interworking function, N3IWF) or a next generation access gateway (next generation packet data gateway, ngPDG).

However, currently, a non-5GC terminal device that does not support a non-access stratum (non-access stratum, NAS) function or a subscriber identity module (subscriber identity module, SIM) card and that is not a 5GC subscriber cannot access the 5GC.

### SUMMARY

This application proposes a communication method and apparatus, to resolve a problem that a terminal device that does not support a SIM card and a NAS function and that is not a 5GC subscribed cannot access a 5GC.

According to a first aspect, this application proposes a communication method. In the method, a terminal device accesses a first network by using a second network. The method includes the following steps.

A first data management network element in the first network obtains identification information of the terminal device connected to an access gateway in the second network. For example, the first network may be a 5GC, a future mobile communication system such as 6G, or the like. The second network may be a campus network, a private network, a local network, or the like. This is not limited in this application.

The first data management network element obtains, based on the identification information, an access parameter of the terminal device from a second data management network element corresponding to the terminal device in the second network. For example, the access parameter includes at least one of service type information, for example, an IP type service, an Ethernet type service, or an unstructured type service, a service bandwidth requirement, and/or an authentication parameter.

The first data management network element obtains subscription data of the terminal device based on the access parameter. For example, the subscription data includes a permanent identifier of the terminal device and at least one of a PDU session type, a slice type, a quality of service (quality of service, QoS) parameter, and/or a data network name (data network name, DNN). There is a correspondence between the permanent identifier of the terminal device and the identification information of the terminal device.

The first data management network element sends the subscription data of the terminal device to the access gateway.

In a possible implementation, the method further includes:
The first data management network element obtains first indication information. The first indication information indicates that the terminal device accesses the first network for the first time. For example, the first indication information may be a first access indication and/or a subscription data request indication. The first access indication indicates that the terminal device establishes a connection to the first network for the first time and the subscription data of the terminal device needs to be requested, or indicates that the access gateway does not have the subscription data of the terminal device. For example, original subscription data may be lost due to fault recovery of the access gateway, and the subscription data of the terminal device needs to be requested. The subscription data request indication indicates that the access gateway does not have the subscription data of the terminal device and the subscription data of the terminal device needs to be requested.

In a possible implementation, the method further includes:
The first data management network element obtains second indication information. The second indication information indicates to skip performing authentication on the terminal device. For example, the second indication information may be specifically an authentication omitting indication.

The first data management network element sends the second indication information to an authentication server function (authentication server function, AUSF) network element. The AUSF network element skips, based on the second indication information, performing authentication on the terminal device.

In a possible implementation, the method further includes:
The first data management network element obtains the permanent identifier of the terminal device based on the access parameter and/or the identification information of the terminal device.

In a possible implementation, the terminal device does not support a SIM card and a NAS function and is not a 5GC subscriber.

In a possible implementation, the method further includes:
The first data management network element obtains location information of the terminal device.

The first data management network element determines the second data management network element based on the location information.

In a possible implementation, that the first data management network element obtains subscription data of the terminal device based on the access parameter includes:
The first data management network element generates the subscription data of the terminal device based on the access parameter in a registration procedure.

In a possible implementation, that the first data management network element sends the subscription data of the terminal device to the access gateway includes:
The first data management network element sends the subscription data of the terminal device to the access gateway via a user plane of a protocol data unit (protocol data unit, PDU) session. The PDU session is used for transmitting the subscription data, so that the subscription data is transferred to the access gateway via the user plane. This is applicable to a case in which the subscription data includes a large quantity of parameters and it is inconvenient to transmit the subscription data to the access gateway via a control plane.

Alternatively, the first data management network element sends the subscription data of the terminal device to the access gateway in the registration procedure, so that the subscription data is transferred to the access gateway via the control plane.

In a possible implementation, that the first data management network element sends the subscription data of the terminal device to the access gateway via a user plane of a protocol data unit PDU session includes:
The first data management network element sends the subscription data to a session management function SMF network element via the user plane of the protocol data unit PDU session, to enable the SMF network element to transmit the subscription data to the access gateway by using the PDU session corresponding to a first DNN. The first DNN indicates that the PDU session is used for transmitting the subscription data. The first DNN is a preconfigured DNN.

In the technical solutions provided in this application, the first data management network element in the first network obtains the access parameter of the terminal device based on the obtained identification information of the terminal device (that is, the terminal device that does not support the SIM card and the NAS function and that is not the 5GC subscriber). Then, the subscription data of the terminal device is obtained based on the access parameter. Then, the subscription data is sent to the access gateway in the second network. In this way, the terminal device that does not support the SIM card and the NAS function and that is not the 5GC subscriber accesses the first network by using the second network.

According to a second aspect, this application further proposes a communication method. The method includes the following steps.

An access gateway in a second network establishes a connection to a terminal device in the second network. A connection establishment manner is not limited in this application.

The access gateway obtains subscription data of the terminal device from a first network. For example, the subscription data includes a permanent identifier of the terminal device and at least one of a PDU session type, a slice type, a QoS parameter, and/or a DNN.

The access gateway accesses the first network based on the subscription data.

In a possible implementation, the method further includes:
The access gateway determines that there is no subscription data of the terminal device locally, and therefore needs to request the subscription data of the terminal device from the first network.

In a possible implementation, the method further includes:
The access gateway determines, based on identification information of the terminal device, that the terminal device accesses the first network for the first time.

In a possible implementation, the method further includes:
The access gateway sends a registration request message to the first network. The registration request message includes first indication information and/or second indication information. The first indication information indicates that the terminal device accesses the first network for the first time. The second indication information indicates to skip performing authentication on the terminal device.

In a possible implementation, that the access gateway obtains subscription data of the terminal device from a first network includes:

The access gateway obtains the subscription data of the terminal device from the first network in a registration procedure.

In a possible implementation, the method further includes:
The access gateway establishes a protocol data unit PDU session used for transmitting the subscription data.

That the access gateway obtains subscription data of the terminal device from a first network includes:
The access gateway obtains the subscription data of the terminal device from the first network via a user plane of the PDU session, so that the subscription data is transferred to the access gateway via the user plane. This is applicable to a case in which the subscription data includes a large quantity of parameters and it is inconvenient to transmit the subscription data to the access gateway via a control plane.

In a possible implementation, that the access gateway obtains the subscription data of the terminal device from the first network in a registration procedure includes:

The access gateway obtains the permanent identifier of the terminal device from the first network in the registration procedure.

The method further includes:
The access gateway determines the terminal device based on the permanent identifier.

In the technical solutions provided in this application, the access gateway in the second network accesses the first network based on the subscription data that is of the terminal device (that is, the terminal device that does not support a SIM card and a NAS function and that is not a 5GC subscriber) and that is obtained from the first network. In this way, the terminal device that does not support the SIM card and the NAS function and that is not the 5GC subscriber accesses the first network by using the second network.

According to a third aspect, this application proposes a communication apparatus, including at least one processor. The processor is configured to execute a program stored in a memory; and when the program is executed, the communication apparatus is enabled to perform:
the method according to the first aspect and the possible implementations of the first aspect; or
the method according to the second aspect and the possible implementations of the second aspect.

In a possible implementation, the communication apparatus further includes the foregoing memory. Optionally, the processor and the memory may be integrated together.

In another possible implementation, the memory is disposed outside the apparatus.

According to a fourth aspect, this application proposes a computer program product including instructions. When the computer program product runs on a computer, the method according to the first aspect and the possible implementations of the first aspect is performed by the computer, or the method according to the second aspect and the possible implementations of the second aspect is performed by the computer.

According to a fifth aspect, this application proposes a computer-readable storage medium. The computer-readable storage medium stores a computer program; and when the computer program is executed by a processor, the method according to the first aspect and the possible implementations of the first aspect is performed, or the method according to the second aspect and the possible implementations of the second aspect is performed.

According to a sixth aspect, this application provides a communication system. The communication system includes:
a first data management network element, configured to perform the method according to the first aspect and the possible implementations of the first aspect;
an AUSF network element, configured to communicate with the first data management network element; and
an SMF network element, configured to communicate with the first data management network element.

### BRIEF DESCRIPTION OF DRAWINGS

FIG. 1 is a schematic diagram of a 5G service-based network architecture in a possible implementation;
FIG. 2 is a schematic diagram of a network architecture in which 3GPP accesses a 5GC in a possible implementation;
FIG. 3 is a schematic diagram of a network architecture in which an untrusted non-3GPP (Untrusted Non-3GPP) accesses a 5GC in a possible implementation;
FIG. 4 is a schematic diagram of a network architecture in which a trusted WLAN (Trusted WLAN Access Point, TWAP) accesses a 5GC in a possible implementation;
FIG. 5 is a schematic flowchart of a communication method according to an embodiment of this application;
FIG. 6 is a schematic flowchart in which a first data management network element obtains, via a control plane, identification information of a second terminal device connected to an access gateway according to an embodiment of this application;
FIG. 7 is a schematic flowchart in which a first data management network element obtains, via a user plane, identification information of a second terminal device connected to an access gateway according to an embodiment of this application;
FIG. 8 is a schematic flowchart in which a first data management network element determines a second data management network element corresponding to a second terminal device in a second network according to an embodiment of this application;
FIG. 9 is another schematic flowchart in which a first data management network element determines a second data management network element corresponding to a second terminal device in a second network according to an embodiment of this application;
FIG. 10A to FIG. 10B are another schematic flowchart of a communication method according to an embodiment of this application;
FIG. 11A to FIG. 11C are another schematic flowchart of a communication method according to an embodiment of this application;
FIG. 12A to FIG. 12C are another schematic flowchart of a communication method according to an embodiment of this application;
FIG. 13 is a schematic diagram of a structure of a communication apparatus according to an embodiment of this application;
FIG. 14 is a schematic diagram of another structure of a communication apparatus according to an embodiment of this application;
FIG. 15 is a schematic diagram of still another structure of a communication apparatus according to an embodiment of this application; and
FIG. 16 is a schematic diagram of a structure of a communication system according to an embodiment of this application.

### DESCRIPTION OF EMBODIMENTS

To make objectives, technical solutions, and advantages that are of embodiments of this application clearer, the following describes specific implementations of embodiments of this application in detail with reference to the accompanying drawings.

It should be noted that, the term "and/or" in this application describes only an association relationship for describing associated objects and represents that three relationships may exist. For example, A and/or B may represent the following three cases: Only A exists, both A and B exist, and only B exists. In the specification and claims of embodiments of this application, terms such as "first" and "second" are used for distinguishing between different objects, but are not intended to describe a specific order of objects. For example, a first data management network element, a second data management network element, and the like are configured to distinguish between different data management network elements, but are not intended to describe a specific order of target objects. In embodiments of this application, words such as "example", "exemplary", or "for example" are used for representing giving an example, an illustration, or a description. Any embodiment or design scheme described by using "example", "exemplary", or "for example" in embodiments of this application shall not be construed as having more advantages than another embodiment or design scheme. Exactly, use of the term "example", "for example", or the like is intended to present a related concept in a specific manner. In the descriptions of embodiments of this application, unless otherwise stated, "a plurality of" means two or more than two.

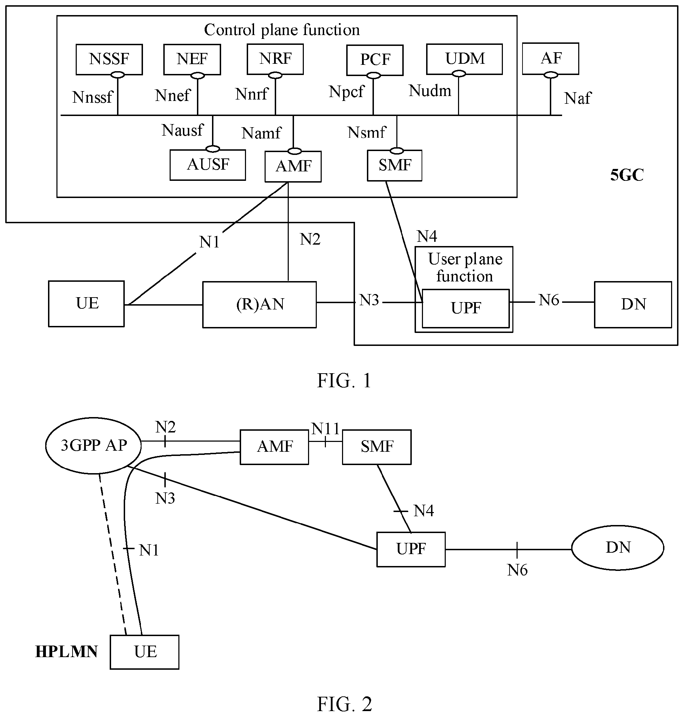

For example, FIG. 1 is a schematic diagram of a 5G service-based network architecture. As shown in FIG. 1, the network structure uses a service-based interface, and may include user equipment (user equipment, UE), a 5GC, a radio access network (radio access network, RAN), namely, a 5G access network, and the like. The UE may access the 5GC through an N1 interface, or may first access the RAN, and then the RAN accesses the 5GC through an N2 or N3 interface. The 5GC includes a control plane function (control plane function, CPF), a user plane function (user plane function, UPF), an application function (application function, AF) network element, a data network (data network, DN) network element, and the like.

The CPF is mainly responsible for user registration authentication, mobility management, delivery of a data packet forwarding policy and a QoS control policy to the UPF, and the like, and may be further divided into a network slice selection function (Network Slice Selection Function, NSSF) network element, a network exposure function (Network Exposure Function, NEF) network element, a network repository function (NF Repository Function, NRF) network element, a policy control function (policy control function, PCF) network element, a unified data management (unified data management, UDM) network element, an AUSF network element, an access and mobility management function (access and mobility management function, AMF) network element, an SMF network element, and the like in FIG. 1.

Specifically, the NSSF network element is responsible for selecting a set of network slice instances serving the UE. The NEF network element is responsible for collection, analysis, and reorganization of network capabilities and exposure of the network capabilities. The NRF network element is configured to perform registration, management, and status monitoring on a network function (network function, NF), to implement automatic management of all NFs. The PCF network element is mainly configured to deliver a service-related policy to the AMF network element or the SMF network element. For example, the PCF network element obtains a user subscription policy from the UDM network element, delivers the user subscription policy to the AMF network element or the SMF network element. The UDM network element is mainly configured to store subscription data of the UE. The AUSF network element is mainly responsible for performing authentication on the UE, to determine validity of the UE. The AMF network element is responsible for a registration procedure during user access and location management during user movement. The SMF network element is responsible for establishing a corresponding session connection on a network side when a user initiates a service, to provide a specific service for the user, for example, deliver a data packet forwarding policy, a QoS policy, and the like to the UPF network element based on an N4 interface between the SMF network element and the UPF network element.

The UPF is mainly responsible for routing and forwarding of a packet data packet, QoS control, charging information statistics, and the like. For example, the UPF may support an uplink classifier to route a data packet to an instance of the DN.

The AF network element is mainly configured to send an application-related requirement to the PCF network element, to enable the PCF network element to generate a corresponding policy. For example, an application may be an internal application of an operator, for example, a Volte AF. If the AF network element and another NF, for example, the PCF network element, are in trusted domain, the application-related requirement may be directly sent to the another NF, for example, the PCF network element.

The DN network element provides a service for the UE, for example, provides a mobile operator service, an internet service, or a third-party service.

It may be understood that the 5G network architecture shown in FIG. 1 not only supports access to the 5GC by using a radio technology defined in 3GPP standard groups, for example, LTE or a 5G RAN, but also supports access to the 5GC by using a non-3GPP access technology and an N3IWF or an ngPDG.

For example, FIG. 2 is a schematic diagram of a network architecture in which 3GPP accesses a 5GC. The network architecture includes an AMF network element, an SMF network element, a UPF network element, a DN network element, a 3GPP access point (access point, AP), and UE. Functions of the AMF network element, the SMF network element, the UPF network element, and the DN network element are the same as those described above for the network elements in FIG. 1. Details are not described herein again.

In an example, in FIG. 2, the UE in a home public land mobile network (home public land mobile network, HPLMN) may first establish a connection to the 3GPP AP by using a wireless network, for example, Bluetooth. Then, the 3GPP AP accesses the 5GC through an N2 interface.

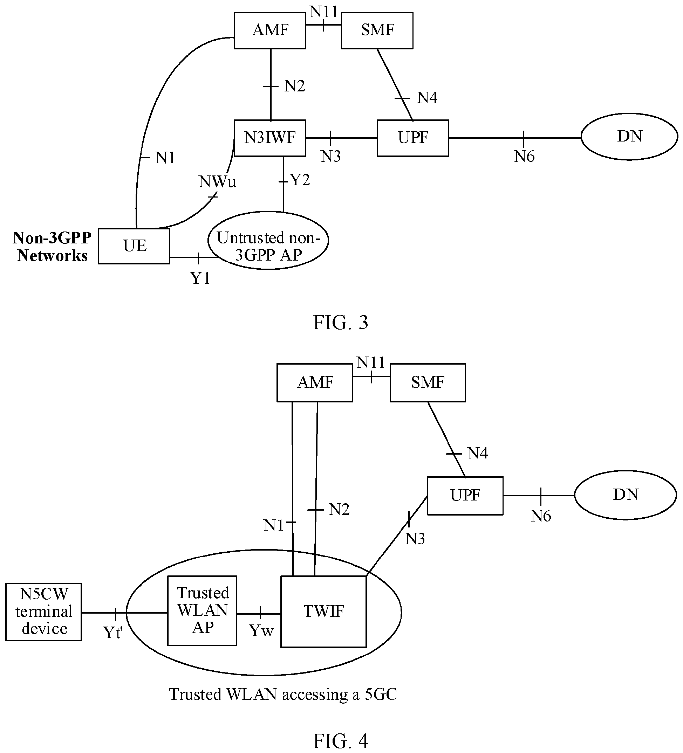

For example, FIG. 3 is a schematic diagram of a network architecture in which an untrusted non-3GPP accesses a 5GC. The network architecture uses a point-to-point interface protocol, and may include an AMF network element, an SMF network element, a UPF network element, a DN network element, an N3IWF, an untrusted non-3GPP AP, UE, and the like. Functions of the AMF network element, the SMF network element, the UPF network element, and the DN network element are the same as those described above for the network elements in FIG. 1. Details are not described herein again.

In an example, in FIG. 3, when the untrusted non-3GPP accesses the 5GC, the UE may establish a connection to the untrusted non-3GPP AP through a Y1 interface. Then, the untrusted non-3GPP AP establishes a connection to the N3IWF through a Y2 interface. The N3IWF is an untrusted non-3GPP access gateway. Then, the N3IWF represents the UE to generate a registration request message, and sends the registration request message to the AMF network element through an N2 interface.

In an example, the 5GC mentioned in this embodiment of this application may alternatively support trusted non-3GPP access and/or fixed network access. A trusted non-3GPP network includes a trusted WLAN network, and a fixed network includes fixed home network access and the like.

For example, FIG. 4 is a schematic diagram of a network architecture in which a trusted WLAN accesses a 5GC. The network architecture uses a point-to-point interface protocol, and may include an AMF network element, an SMF network element, a UPF network element, a DN network element, a trusted WLAN interworking function (trusted WLAN interworking function, TWIF), a trusted WLAN AP, and a non-5G capable over WLAN (Non 5C WLAN, N5CW) terminal device. For ease of description, the N5CW terminal device is referred to as a first terminal device below. Functions of the AMF network element, the SMF network element, the UPF network element, and the DN network element are the same as those described above for the network elements in FIG. 1. Details are not described herein again.

It may be understood that the network architecture in which the trusted WLAN accesses the 5GC shown in FIG. 4 is similar to the untrusted non-3GPP access architecture shown in FIG. 3. Amain difference between the two architectures is that the TWIF in FIG. 4 replaces the N3IWF in FIG. 3, and the trusted WLAN AP in FIG. 4 replaces the untrusted non-3GPP AP in FIG. 3.

In an example, an access network device between UE and the foregoing access gateway includes a WLAN AP, a fixed network access network device (fixed access network, FAN), a switch, a router, and the like.

It should be noted that, in FIG. 4, after the first terminal device establishes a connection to the TWIF, the TWIF may represent the first terminal device to generate a NAS message, for example, a registration request message, and send the message to the AMF network element.

Although the first terminal device described in FIG. 4 does not support a NAS function, the first terminal device supports a SIM card and is a 5GC subscriber. Therefore, UDM has subscription data related to the first terminal device.

It should be noted that, for the first terminal device described in FIG. 4, a terminal type of the first terminal device is basically a mobile phone or an intelligent terminal. Therefore, context information at a terminal granularity does not need to be configured on the TWIF. In other words, the TWIF can represent all N5CW terminals to access the 5GC by using default subscription data. However, there are various terminal types of a non-5GC terminal device that does not support a NAS function or a SIM card and that is not a 5GC subscriber. For example, the terminal type is a sensor device, an industrial terminal, an electronic label (radio frequency identification, RFID) device, a camera, a laptop, or an iPad. Services supported by different device types vary greatly. Therefore, currently, the TWIF cannot uniformly represent the non-5GC terminal device that does not support the NAS function or the SIM card and that is not the 5GC subscriber to access the 5GC. For ease of description, the non-5GC terminal device that does not support the NAS function or the SIM card and that is not the 5GC subscriber is referred to as a second terminal device below.

To resolve the foregoing problem, embodiments of this application provide a communication method. In the communication method, an access gateway may represent a second terminal device to access a 5GC, and obtain subscription data of the second terminal device via a control plane or a user plane. Alternatively, an access gateway may be independently used as a terminal device to access a 5GC, and obtain subscription data of a second terminal device via a user plane. In this way, the second terminal device accesses the 5GC or a future mobile communication system, for example, 6G, by using a network in which the second terminal device and the access gateway are located. In other words, the second terminal device registers with the 5GC and the future mobile communication system by using the network in which the second terminal device and the access gateway are located. For ease of description, in the following, the 5GC or the future mobile communication system is referred to as a first network, and the network in which the second terminal device and the access gateway are located is referred to as a second network. For example, the second network may be a campus network, a private network, or a local network. This is not limited in this application.

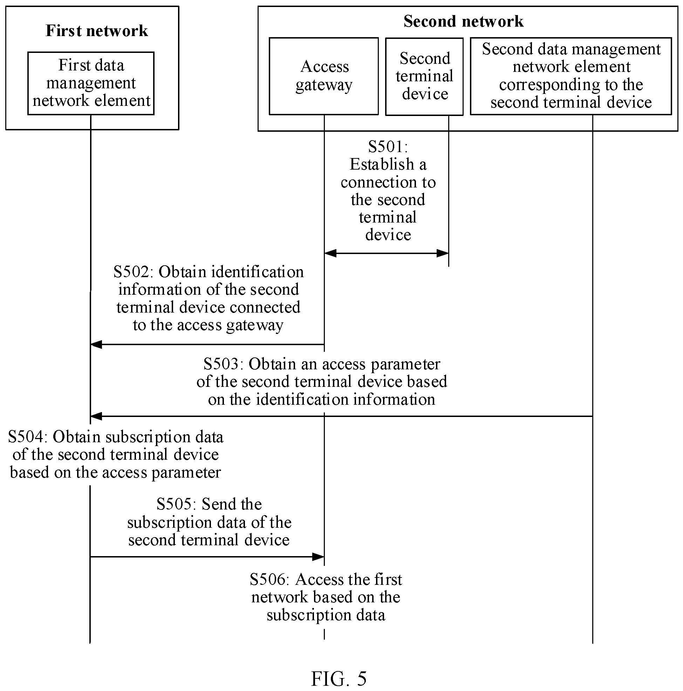

For example, FIG. 5 is a schematic flowchart of a communication method according to an embodiment of this application. The schematic flowchart mainly relates to interaction between a first data management network element, an access gateway, a second terminal device, and a second data management network element corresponding to the second terminal device. A connection may be established between the first data management network element and the access gateway by using a wired network, to perform data exchange. A connection may be established, by using a wired network, between the first data management network element and the second data management network element corresponding to the second terminal device, to perform data exchange. A connection may be established between the access gateway and the second terminal device by using a network such as a wired network or a wireless network, to perform data exchange. For example, the connection may be established between the access gateway and the second terminal device by using a short-range wireless communication technology, for example, by using Bluetooth.

As shown in FIG. 5, the communication method may include the following steps.

S501: The access gateway in a second network establishes the connection to the second terminal device in the second network.

Specifically, the access gateway in the second network directly establishes the connection to the second terminal device in the second network. A connection establishment solution is not limited in this application.

In a possible implementation, before the access gateway establishes the connection to the second terminal device, the access gateway first accesses a first network as a terminal device, in other words, the access gateway initiates a registration procedure of the first network as the terminal device. Then, the access gateway establishes a PDU session as the terminal device, where the PDU session is used for transmitting subscription data of the second terminal device. The subscription data includes a permanent identifier of the terminal device and at least one of a PDU session type, a slice type, a QoS parameter, and/or a DNN. Finally, the access gateway in the second network establishes the connection to the second terminal device in the second network.

S502: The first data management network element in the first network obtains identification information of the second terminal device connected to the access gateway.

Specifically, after the access gateway in the second network establishes the connection to the second terminal device in the second network, the first data management network element in the first network may obtain the identification information of the second terminal device connected to the access gateway.

In an example, before the first data management network element obtains the identification information, the access gateway may determine whether the second terminal device accesses the first network for the first time. For example, after the access gateway in the second network establishes the connection to the second terminal device in the second network in S501, the access gateway obtains the identification information of the second terminal device. For example, the identification information may be specifically a media access control (media access control, MAC) address, a device identifier, and/or the like. This is not limited in this application. Optionally, the identification information of the second terminal device includes service provider information of the second terminal device. Then, the access gateway searches for the subscription data of the second terminal device based on the identification information of the second terminal device. At least one of the PDU session type, the slice type, the QoS parameter, and/or the DNN in the subscription data may be used as a parameter required for the second terminal device to access the first network. For a second terminal device that accesses the first network not for the first time, subscription data of the second terminal device is locally stored. Therefore, if subscription data of a second terminal device is not found locally, the access gateway determines that the second terminal device accesses the first network for the first time. For another example, the access gateway does not determine whether the second terminal device accesses the first network for the first time, but directly considers by default that the second terminal device accesses the first network for the first time. When the second terminal device accesses the first network for the first time, the first data management network element may obtain the identification information in the following two manners.

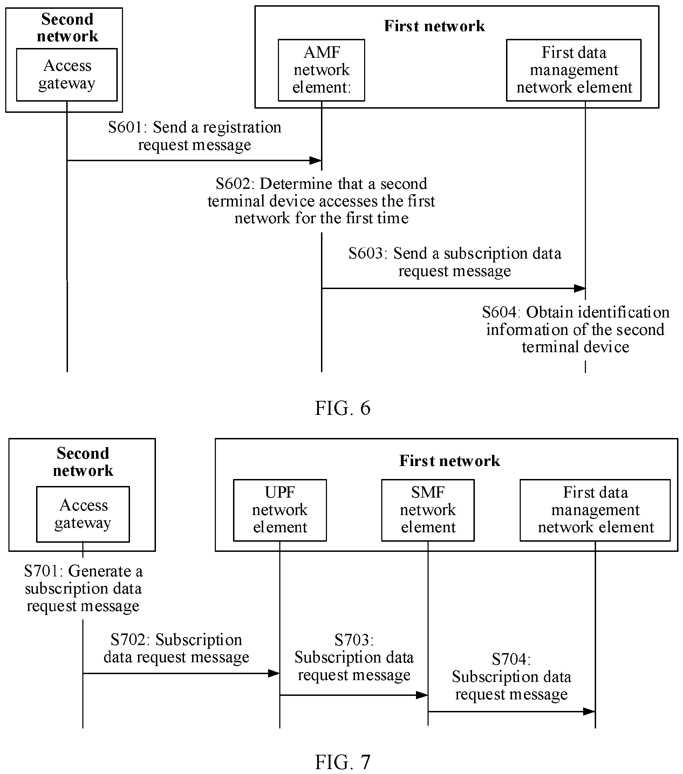

In a first manner, the first data management network element may obtain, via a control plane, the identification information of the second terminal device connected to the access gateway. For a specific process, refer to the following detailed descriptions of a schematic flowchart shown in FIG. 6.

In a second manner, the first data management network element obtains, via a user plane, the identification information of the second terminal device connected to the access gateway. For a specific process, refer to the following detailed descriptions of a schematic flowchart shown in FIG. 7.

S503: The first data management network element obtains, based on the identification information, an access parameter of the second terminal device from the second data management network element corresponding to the second terminal device in the second network.

Specifically, after the first data management network element in the first network obtains the identification information of the second terminal device connected to the access gateway, the first data management network element in the first network may obtain the access parameter of the second terminal device from the second data management network element based on the identification information.

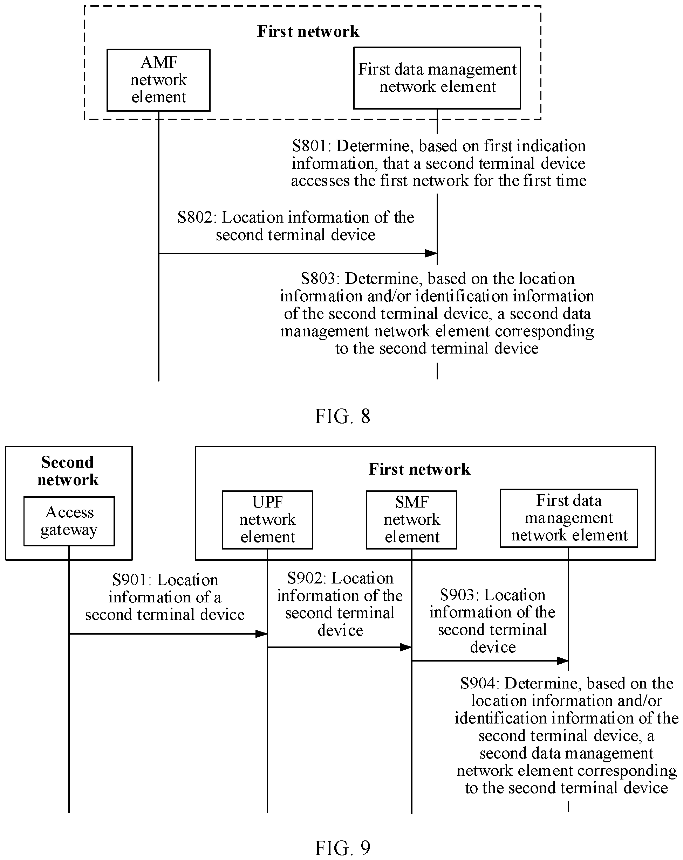

In an example, before the first data management network element obtains the access parameter of the second terminal device from the second data management network element based on the identification information, the first data management network element needs to determine the second data management network element corresponding to the second terminal device in the second network. For a specific process, refer to the following detailed descriptions of a schematic flowchart shown in FIG. 8.

The following describes in detail how the first data management network element obtains, based on the identification information of the second terminal device, the access parameter of the second terminal device from the second data management network element corresponding to the second terminal device in the second network.

In an embodiment, first, the first data management network element sends an access parameter request message to the second data management network element. The access parameter request message includes at least the identification information of the second terminal device, and may be locally configured by the second data management network element. Then, the second data management network element searches for device information of the second terminal device based on the identification information of the second terminal device. For example, the device information may be at least one of service type information, for example, an IP type service, an Ethernet type service, or an unstructured type service, supported by a device, a service bandwidth requirement, and/or an authentication parameter. Finally, the second data management network element sends an access parameter response message to the first data management network element. The access parameter response message includes the identification information and the access parameter of the second terminal device. The access parameter includes the device information. In this case, the first data management network element obtains the access parameter of the second terminal device.

It should be noted that, for a second terminal device that accesses the first network not for the first time, the second data management network element further stores a permanent identifier of the second terminal device. Therefore, for the second terminal device that accesses the first network not for the first time, device information that is of the second terminal device and that is found by the second data management network element based on identification information further includes the permanent identifier of the second terminal device.

S504: The first data management network element obtains the subscription data of the second terminal device based on the access parameter.

In an embodiment, because the second terminal device accesses the first network for the first time, the first data management network element allocates the permanent identifier of the second terminal device based on the identification information and/or the access parameter of the second terminal device in the obtained access parameter response message. In addition, in the registration procedure, the first data management network element generates the subscription data of the second terminal device based on the access parameter obtained in S503.

It should be noted that, for a second terminal device that accesses the first network not for the first time, the first data management network element stores subscription data of the second terminal device that accesses the first network not for the first time. Therefore, the first data management network element searches, based on a permanent identifier of the second terminal device sent by the second data management network element, for the subscription data of the second terminal device that accesses the first network not for the first time.

S505: The first data management network element sends the subscription data of the second terminal device to the access gateway.

Specifically, after the first data management network element obtains the subscription data, the first data management network element may send the subscription data of the second terminal device to the access gateway. The subscription data includes the permanent identifier of the terminal device and the at least one of the PDU session type, the slice type, the QoS parameter, and/or the DNN.

In a possible implementation, the subscription data may be sent by the first data management network element to the second terminal device when the access gateway registers with the first network.

For example, the first data management network element sends the subscription data of the second terminal device to an AMF network element. The AMF network element forwards the subscription data of the second terminal device to the access gateway. In this case, the access gateway obtains the subscription data of the second terminal device, and completes the procedure in which the access gateway registers with the first network. In this way, the first data management network element sends the subscription data of the second terminal device to the access gateway via a control plane of the first network.

In another possible implementation, the first data management network element may send the subscription data of the second terminal device to the access gateway via a user plane of a first PDU session, for example, send the at least one of the PDU session type, the slice type, the QoS parameter, and/or the DNN in the subscription data.

For example, in S504, after obtaining the subscription data of the second terminal device, the first data management network element sends only the permanent identifier of the second terminal device in the subscription data to the AMF network element, and does not send any one of the PDU session type, the slice type, the QoS parameter, and/or the DNN in the subscription data. The AMF network element sends the permanent identifier of the second terminal device to the access gateway. It may be understood that the access gateway may determine the second terminal device based on the permanent identifier of the second terminal device. Then, the access gateway establishes the first PDU session, where the first PDU session is used for transmitting the at least one of the PDU session type, the slice type, the QoS parameter, and/or the DNN in the subscription data of the second terminal device. The access gateway sends a first request message to a UPF network element via the user plane of the first PDU session. The first request message is used to request the at least one of the PDU session type, the slice type, the QoS parameter, and/or the DNN in the subscription data. The UPF network element forwards the first request message to an SMF network element. The SMF network element forwards the first request message to the first data management network element. The first data management network element sends the at least one of the PDU session type, the slice type, the QoS parameter, and/or the DNN in the subscription data to the SMF network element. The SMF network element then forwards the at least one of the PDU session type, the slice type, the QoS parameter, and/or the DNN in the subscription data to the UPF network element. The UPF network element then forwards the at least one of the PDU session type, the slice type, the QoS parameter, and/or the DNN in the subscription data to the access gateway via the user plane of the first PDU session. In this case, the access gateway obtains the subscription data. In this way, the first data management network element sends the at least one of the PDU session type, the slice type, the QoS parameter, and/or the DNN in the subscription data of the second terminal device to the access gateway via a user plane of the first network.

In still another possible implementation, the first data management network element may send the subscription data of the second terminal device to the access gateway via a user plane of the PDU session.

For example, the first data management network element sends the subscription data of the second terminal device to the SMF network element. The SMF network element forwards the subscription data of the second terminal device to a UPF network element. The UPF network element forwards the subscription data of the second terminal device to the access gateway via the user plane of the PDU session. In this case, the access gateway obtains the subscription data of the second terminal device. In this way, the first data management network element sends the subscription data of the second terminal device to the access gateway via a user plane of the first network.

S506: The access gateway accesses the first network based on the subscription data.

Specifically, after obtaining the subscription data of the second terminal device, the access gateway may access the first network based on the obtained subscription data of the second terminal device.

In a possible implementation, the access gateway may locally store the obtained subscription data. In addition, the access gateway may establish a second PDU session based on the subscription data. The second PDU session is used for transmitting service data related to the second terminal device. In other words, the access gateway establishes different second PDU sessions for different second terminal devices. The first network also establishes the second PDU session. If the second PDU session is an IP-type PDU session, the first network allocates a UE IP address to the PDU session. After receiving the UE IP address, the access gateway sends the UE IP address to the second terminal device. The second terminal device uses the UE IP address to encapsulate a service data packet, and sends an encapsulated service data packet to the first network.

It should be noted that after the second terminal device subsequently establishes a connection to the access gateway again, the access gateway may search for the subscription data of the second terminal device based on the identification information of the second terminal device. Then, the access gateway may initiate, based on the subscription data found by the access gateway, the procedure of registering with the first network.

In the solution provided in this embodiment of this application, the access gateway may represent the second terminal device to access the first network. The first data management network element in the first network may transfer the subscription data of the second terminal device to the access gateway via the control plane or the user plane. In this way, the second terminal device can access the first network. Alternatively, the access gateway first directly registers with (or accesses) the first network, and then the first data management network element transmits the subscription data of the second terminal device to the access gateway by using the established PDU session. In this way, the second terminal device can access the first network. Therefore, a current problem that a TWIF cannot uniformly represent a non-5GC terminal device to access a 5GC is resolved, so that the non-5GC terminal device accesses the 5GC by using the access gateway.

The following describes in detail the specific process in which the first data management network element obtains, via the control plane, the identification information of the second terminal device connected to the access gateway. Refer to the schematic flowchart shown in FIG. 6. The schematic flowchart includes the following steps.

S601: The access gateway sends a registration request message to the AMF network element in the first network.

In an embodiment, after determining that the second terminal device accesses the first network for the first time, the access gateway sends the registration request message to the AMF network element on the control plane in the first network. The registration request message may include the identification information of the second terminal device and first indication information and/or second indication information. The first indication information indicates that the second terminal device accesses the first network for the first time. For example, the first indication information may be specifically a first access indication and/or a subscription data request indication. The first access indication indicates that the second terminal device establishes a connection to the first network for the first time and subscription data of the second terminal device needs to be requested, or indicates that the access gateway does not have the subscription data of the second terminal device. For example, original subscription data may be lost due to fault recovery of the access gateway, and the subscription data of the second terminal device needs to be requested. The subscription data request indication indicates that the access gateway does not have the subscription data of the second terminal device and the subscription data of the second terminal device needs to be requested. Authentication cannot be performed on a terminal device that does not support a SIM card. Therefore, for the second terminal device in this application, the second indication information indicates to skip performing authentication on the second terminal device. For example, the second indication information may be specifically an authentication omitting indication.

S602: The AMF network element determines that the second terminal device accesses the first network for the first time.

In an embodiment, after receiving the registration request message, the AMF network element determines, based on the first indication information in the registration request message, that the second terminal device accesses the first network for the first time and the subscription data of the second terminal device needs to be requested.

S603: The AMF network element sends a subscription data request message to the first data management network element.

In an embodiment, the subscription data request message sent by the AMF network element to the first data management network element includes at least the identification information of the second terminal device.

S604: The first data management network element obtains the identification information of the second terminal device.

Specifically, the first data management network element receives the subscription data request message sent by the AMF network element. In this case, the first data management network element obtains the identification information of the second terminal device.

Optionally, S601 to S604 in the schematic flowchart shown in FIG. 6 may be replaced with S701 to S704 in the schematic flowchart shown in FIG. 7. In this way, the first data management network element obtains, via the user plane, the identification information of the second terminal device connected to the access gateway. A specific implementation process is as follows.

S701: The access gateway generates a subscription data request message.

In an embodiment, after the access gateway determines that the second terminal device accesses the first network for the first time, the access gateway generates the subscription data request message for the second terminal device that accesses the first network for the first time. The subscription data request message includes at least the identification information of the second terminal device.

S702: The access gateway sends the subscription data request message to the UPF network element.

In an embodiment, the access gateway sends the subscription data request message to the UPF network element in the first network via the user plane of the PDU session established in S401.

S703: The UPF network element sends the subscription data request message to the SMF network element.

In an embodiment, the UPF network element in the first network sends the subscription data request message to the SMF network element in the first network.

S704: The SMF network element sends the subscription data request message to the first data management network element.

In an embodiment, the SMF network element in the first network sends the subscription data request message to the first data management network element. In this case, the first data management network element obtains the identification information of the second terminal device included in the subscription data request message.

The following describes in detail the specific process in which the first data management network element determines the second data management network element corresponding to the second terminal device in the second network. Refer to the schematic flowchart shown in FIG. 8. The schematic flowchart includes the following steps.

S801: The first data management network element determines, based on the first indication information, that the second terminal device accesses the first network for the first time.

In an embodiment, after the AMF network element determines that the second terminal device accesses the first network for the first time, the subscription data request message sent to the first data management network element may further include the first indication information and/or the second indication information. The first data management network element determines, based on the first indication information, that the second terminal device accesses the first network for the first time.

S802: The AMF network element sends location information of the second terminal device to the first data management network element.

In an embodiment, in addition to sending the subscription data request message to the first data management network element, the AMF network element may further send the location information of the second terminal device to the first data management network element. The location information may be first identification information of an access point of the second terminal device, physical location information of the second terminal device, and/or second identification information of the second network.

Optionally, the location information of the second terminal device may be included in the subscription data request message, and sent by the AMF network element to the first data management network element.

S803: The first data management network element determines, based on the location information of the second terminal device and/or the identification information of the second terminal device, the second data management network element corresponding to the second terminal device.

In an embodiment, because the second terminal device accesses the first network for the first time, after obtaining the location information of the second terminal device, the first data management network element determines, based on the location information, the second data management network element corresponding to the second terminal device; and/or the first data management network element determines the second data management network element based on the service provider information of the second terminal device included in the identification information of the second terminal device in the subscription data request message.

In S801 to S803, the location information of the second terminal device is sent to the first data management network element via the control plane.

Optionally, in an example, the specific process in which the first data management network element determines the second data management network element corresponding to the second terminal device in the second network, that is, content described in FIG. 8, may be replaced with content described in FIG. 9. Specifically, as shown in FIG. 9, the following steps S901 to S904 may be included. In this way, the access gateway sends location information of the second terminal device to the first data management network element via the user plane. A specific implementation process is as follows.

S901: The access gateway sends the location information of the second terminal device to the UPF network element.

In an embodiment, in addition to sending the subscription data request message to the UPF network element in the first network via the user plane of the PDU session established in S501, the access gateway may further send the location information of the second terminal device to the UPF network element via the user plane of the PDU session established in S501.

Optionally, the location information of the second terminal device may be further included in the subscription data request message, and sent to the UPF network element via the user plane of the PDU session established in S501.

S902: The UPF network element sends the location information of the second terminal device to the SMF network element.

In an embodiment, the UPF network element in the first network forwards the obtained location information of the second terminal device to the SMF network element.

S903: The SMF network element sends the location information of the second terminal device to the first data management network element.

In an embodiment, the SMF network element forwards the obtained location information of the second terminal device to the first data management network element.

S904: The first data management network element determines, based on the location information of the second terminal device and/or the identification information of the second terminal device, the second data management network element corresponding to the second terminal device.

In an embodiment, the first data management network element determines the second data management network element based on the location information of the second terminal device; and/or the first data management network element determines the second data management network element based on the service provider information of the second terminal device included in the identification information of the second terminal device in the subscription data request message.

The following describes, by using examples in more specific embodiments, the solutions provided in embodiments of this application.

In the following embodiments, the first data management network element is a UDM network element, the access gateway is a campus gateway, the second data management network element is a campus AAA server, the first network is a 5GC, and the second network is a network in which the second terminal device and the campus gateway are located.

### Embodiment 1

In this embodiment, a second terminal device can access a 5GC as UE, and a campus gateway is used as a representation of the second terminal device. The 5GC completes an access registration procedure of the second terminal device, and sends, to the campus gateway via a control plane, subscription data required for the second terminal device to access the 5GC.

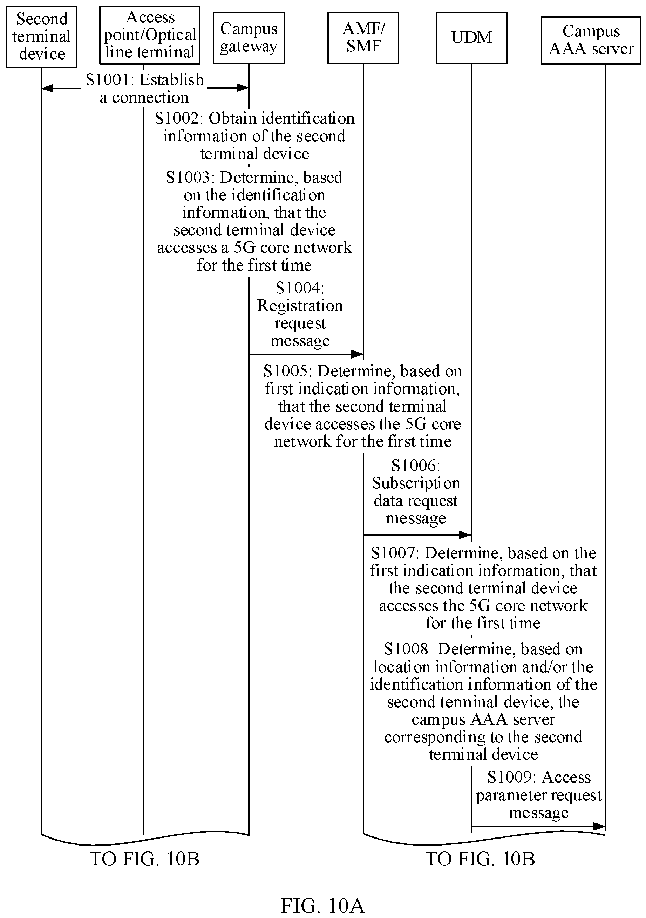

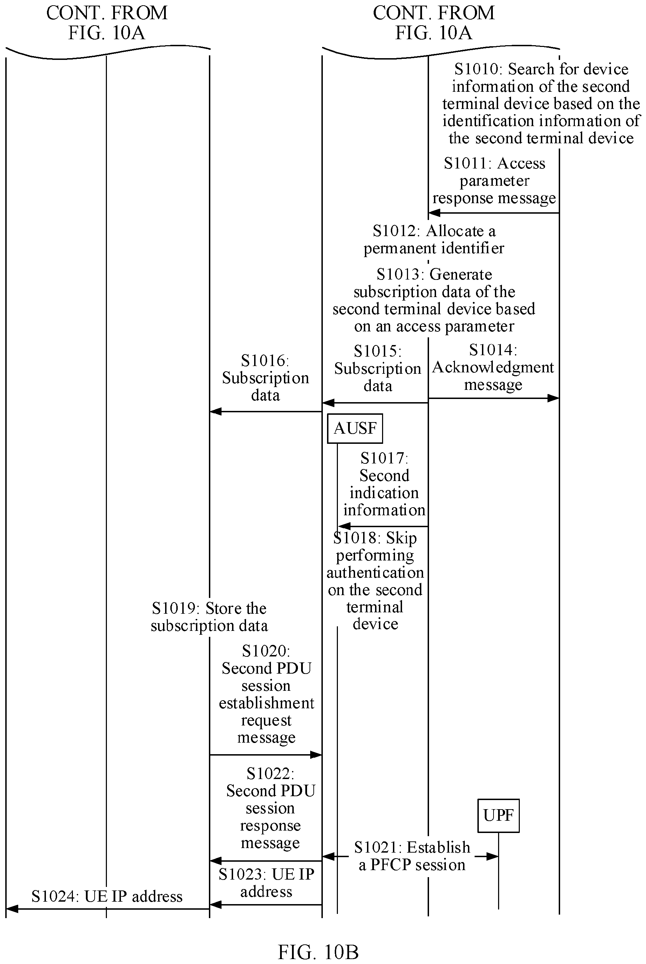

Refer to FIG. 10A to FIG. 10B. The following procedure is used in this embodiment.

S1001: The second terminal device establishes a connection to the campus gateway.

It should be noted that the connection may be established between the second terminal device and the campus gateway by using a network such as a wired network or a wireless network. For example, the wireless network may be a short-range wireless communication technology, for example, Bluetooth. A connection establishment solution is not specifically limited in this embodiment.

S1002: The campus gateway obtains identification information of the second terminal device.

In this embodiment, after establishing the connection to the second terminal device, the campus gateway obtains the identification information of the second terminal device. The identification information may be a MAC address, a device identifier, and/or the like. Optionally, the identification information of the second terminal device includes service provider information of the second terminal device.

S1003: The campus gateway determines, based on the identification information, that the second terminal device accesses the 5GC for the first time.

In this embodiment, for a second terminal device that accesses a first network not for the first time, the campus gateway locally stores subscription data of the second terminal device. Therefore, if the campus gateway finds no subscription data of a second terminal device based on identification information, the campus gateway determines that the second terminal device accesses the 5GC for the first time.

S1004: The campus gateway generates a registration request message and sends the registration request message to an AMF network element.

In this embodiment, the campus gateway represents the second terminal device to generate the registration request message, and sends the registration request message to the AMF network element. It should be noted that the registration request message may include the identification information of the second terminal device and first indication information and/or second indication information. For descriptions of the first indication information and the second indication information, refer to the descriptions of S701. Details are not described herein again.

S1005: The AMF network element determines, based on the first indication information, that the second terminal device accesses the 5GC for the first time.

In this embodiment, the AMF network element determines, based on a first access indication and/or a subscription data request indication in the first indication information, that the second terminal device accesses the 5GC for the first time. For descriptions of the first access indication and the subscription data request indication, refer to the descriptions of S701. Details are not described herein again.

S1006: The AMF network element sends a subscription data request message to a UDM network element.

In this embodiment, the AMF network element sends the subscription data request message to the UDM network element, to obtain the subscription data required for the second terminal device to access the 5GC. For example, the subscription data request message may include the identification information of the second terminal device, the first indication information, the second indication information, and location information of the second terminal device.

S1007: The UDM network element determines, based on the first indication information, that the second terminal device accesses the 5GC for the first time.

In this embodiment, after obtaining the first indication information in the subscription data request message, the UDM network element determines, based on the first access indication and/or the subscription data request indication in the first indication information, that the second terminal device accesses the 5GC for the first time.

S1008: The UDM network element determines, based on the location information of the second terminal device and/or the identification information of the second terminal device, a campus AAA server corresponding to the second terminal device.

In this embodiment, there is a correspondence between the second terminal device and the campus AAA server. After obtaining the location information of the second terminal device in the subscription data request message, the UDM network element may determine, based on the location information, the campus AAA server corresponding to the second terminal device; and/or after obtaining the identification information of the second terminal device, the UDM network element determines, based on the service provider information of the second terminal device included in the identification information, the campus AAA server corresponding to the second terminal device.

S1009: The UDM network element sends an access parameter request message to the campus AAA server.

In this embodiment, an access parameter is stored in the campus AAA server. The UDM network element sends the access parameter request message to the campus AAA server, to obtain the access parameter. The access parameter request message includes at least the identification information of the second terminal device.

S1010: The campus AAA server searches for device information of the second terminal device based on the identification information of the second terminal device.

In this embodiment, after obtaining the identification information of the second terminal device in the access parameter request message, the campus AAA server searches for the device information of the second terminal device based on the identification information. For example, the device information may be at least one of service type information, for example, an IP type service, an Ethernet type service, or an unstructured type service, supported by the second terminal device, a service bandwidth requirement, and/or an authentication parameter.

S1011: The campus AAA server sends an access parameter response message to the UDM network element.

In this embodiment, after finding the device information of the second terminal device, the campus AAA server sends the access parameter response message to the UDM network element in response to the access parameter request message. The access parameter response message includes the identification information and the access parameter of the second terminal device. The access parameter includes the device information.

S1012: The UDM network element allocates a permanent identifier to the second terminal device that accesses the 5GC for the first time.

In this embodiment, the second terminal device that accesses the 5GC for the first time does not have a permanent identifier. Therefore, the UDM network element allocates the permanent identifier to the second terminal device that accesses the 5GC for the first time.

S1013: The UDM network element generates the subscription data of the second terminal device based on the access parameter.

In this embodiment, the second terminal device requires the subscription data to access the 5GC. Therefore, the UDM network element generates, based on the access parameter, the subscription data required for the second terminal device to access the 5GC. The subscription data includes the permanent identifier of the second terminal device and at least one of a PDU session type, a slice type, a QoS parameter, and/or a DNN.

S1014: The UDM network element returns an acknowledgment message to the campus AAA server.

In this embodiment, the UDM network element returns the acknowledgment message to the campus AAA server. The acknowledgment message includes the identification information and the permanent identifier of the second terminal device. Then, the campus AAA server knows a name of the second terminal device in the 5GC, that is, the permanent identifier of the second terminal device.

S1015: The UDM network element sends the subscription data of the second terminal device to the AMF network element.

In this embodiment, the subscription data of the second terminal device is sent to the campus gateway via the control plane. Therefore, in this step, the UDM network element first sends the subscription data of the second terminal device to the AMF network element.

S1016: The AMF network element forwards the subscription data of the second terminal device to the campus gateway.

In this embodiment, the AMF network element forwards the subscription data of the second terminal device to the campus gateway. In this case, the subscription data of the second terminal device is sent to the campus gateway via the control plane.

In addition, the AMF network element further allocates a temporary identifier to the second terminal device. The temporary identifier carries an AMF network element identifier. When the campus gateway is disconnected from the 5GC and then recovers a connection to the 5GC, the previously used AMF network element can be found based on the AMF network element identifier.

S1017: The UDM network element sends the second indication information to an AUSF network element.

Authentication cannot be performed on a terminal device that does not support a SIM card. Therefore, in this embodiment, the UDM network element sends the second indication information, for example, an authentication omitting indication, to the AUSF network element, to enable the AUSF network element to skip performing authentication on a second terminal device that does not support a SIM card or a NAS function and that is not a 5GC subscriber in this embodiment.

S1018: The AUSF network element skips performing authentication on the second terminal device.

In this embodiment, the AUSF network element skips, based on the obtained second indication information, performing authentication on the second terminal device.

S1019: The campus gateway stores the subscription data.

In this embodiment, after obtaining the subscription data, the campus gateway stores the subscription data locally.

S1020: The campus gateway sends a second PDU session establishment request message to the 5GC based on the subscription data.

In this embodiment, to transmit service data related to the second terminal device, the campus gateway needs to establish different second PDU sessions for different second terminal devices, to provide services for the second terminal devices. Therefore, the campus gateway sends the second PDU session establishment request message to the 5GC based on the subscription data.

S1021: The 5GC establishes a packet forwarding control protocol (packet forwarding control protocol, PFCP) session between an SMF network element and a UPF network element.

In this embodiment, to establish a second PDU session, the 5GC needs to establish the PFCP session.

S1022: The 5GC sends a second PDU session response message to the campus gateway.

In this embodiment, the 5GC sends the second PDU session response message to the campus gateway in response to the second PDU session request message. In this case, the second PDU session is successfully established.

S1023: The 5GC sends, to the campus gateway, a UE IP address allocated to the second terminal device.

In this embodiment, the 5GC sends, to the campus gateway, the UE IP address allocated to the second terminal device.

S1024: The campus gateway sends the UE IP address to the second terminal device.

In this embodiment, the campus gateway forwards the UE IP address to the second terminal device, to encapsulate a service data packet.

In this embodiment, the campus gateway represents the second terminal device to access the 5GC. The 5GC sends, to the campus gateway via the control plane, the subscription data required for the second terminal device to access the 5GC.

### Embodiment 2

In this embodiment, a second terminal device can access a 5GC as UE, and a campus gateway is used as a representation of the second terminal device. The 5GC completes an access registration procedure of the second terminal device. Different from Embodiment 1, in Embodiment 2, subscription data required for the second terminal device to access the 5GC is sent to the campus gateway via a user plane.

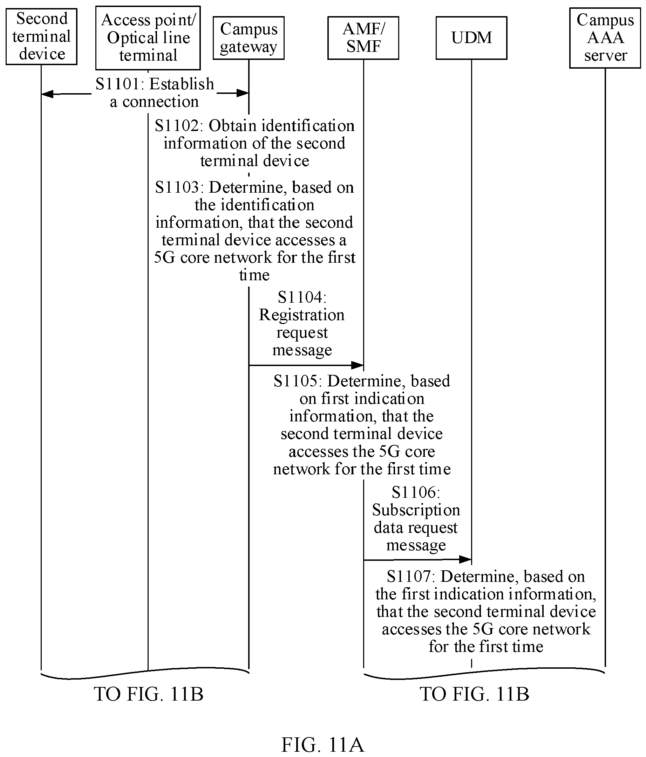

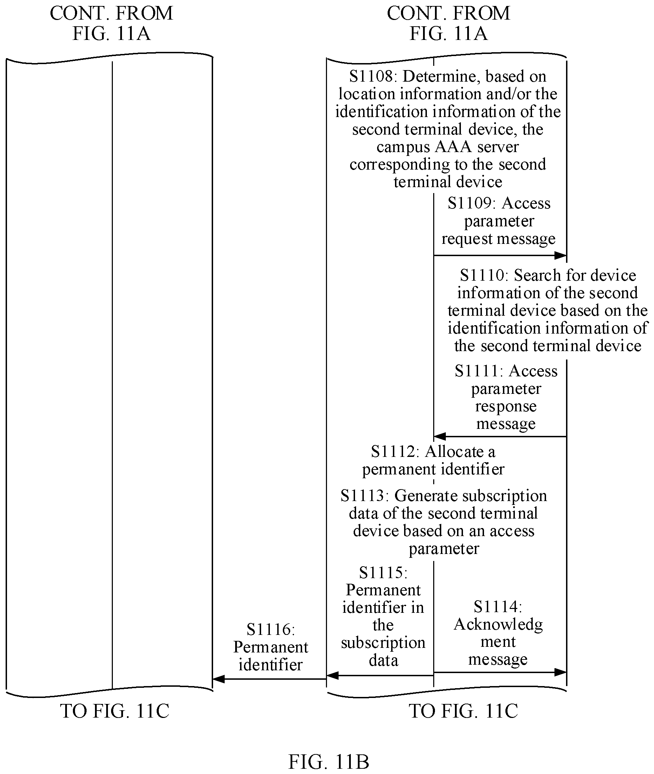

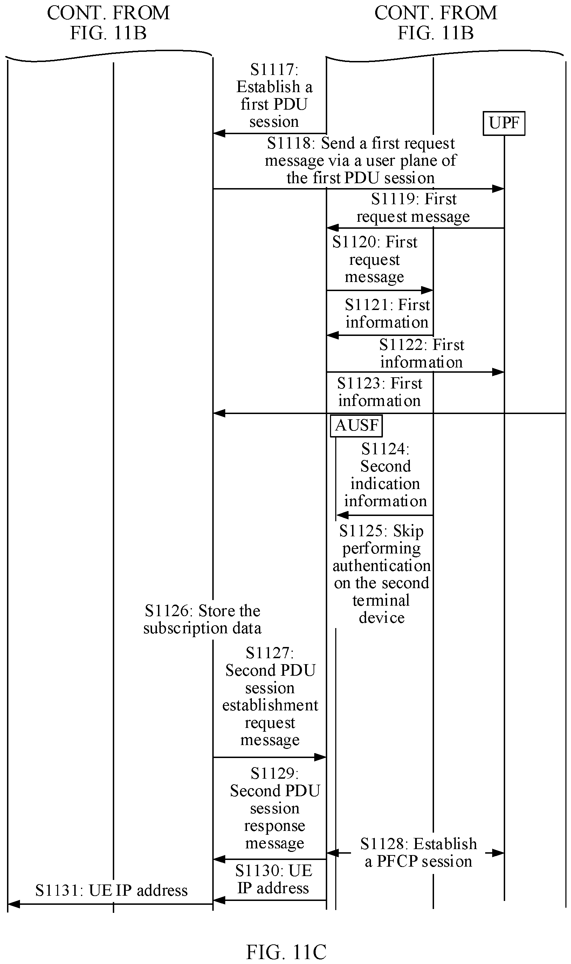

Refer to FIG. 11A to FIG. 11C. The following procedure is used in this embodiment.

A specific implementation process of S1101 to S1114 is the same as a specific implementation process of S1001 to S1014 in Embodiment 1. Details are not described herein again.

S1115: AUDM network element sends a permanent identifier in the subscription data of the second terminal device to an AMF network element.

In Embodiment 1, the UDM network element sends all content included in the subscription data to the AMF network element. This embodiment is different from Embodiment 1. The UDM network element in this embodiment sends the permanent identifier in the subscription data to the AMF network element, and does not send first information in the subscription data. The first information includes at least one of a PDU session type, a slice type, a QoS parameter, and/or a DNN.

S1116: The AMF network element sends the permanent identifier to the campus gateway.

In this embodiment, after obtaining the permanent identifier in the subscription data, the AMF network element forwards the permanent identifier to the campus gateway.

S 1117: The campus gateway establishes a first PDU session.

In this embodiment, the campus gateway establishes the first PDU session, to transmit the first information in the subscription data of the second terminal device.

S1118: The campus gateway sends a first request message to a UPF network element via a user plane of the first PDU session.

In this embodiment, the campus gateway sends the first request message to the UPF network element via the user plane of the first PDU session, to request the first information in the subscription data.

S1119: The UPF network element forwards the first request message to an SMF network element.

In this embodiment, the UPF network element forwards the obtained first request message to the SMF network element.

S1120: The SMF network element forwards the first request message to the UDM network element.

In this embodiment, the SMF network element forwards the obtained first request message to the UDM network element.

S1121: The UDM network element sends the first information in the subscription data to the SMF network element.

In this embodiment, the UDM network element sends the obtained first information in the subscription data, that is, at least one of the PDU session type, the slice type, the QoS parameter, and/or the DNN to the SMF network element.

S1122: The SMF network element forwards the first information to the UPF network element.

In this embodiment, the SMF network element forwards the obtained first information to the UPF network element.

S1123: The UPF network element forwards the first information to the campus gateway via the user plane of the first PDU session.

In this embodiment, the UPF network element forwards the first information to the campus gateway via the user plane of the first PDU session. In this case, the campus gateway obtains all content of the subscription data.

A specific implementation process of S1124 to S1131 is the same as a specific implementation process of S1017 to S1024 in Embodiment 1. Details are not described herein again.

In this embodiment, the at least one of the PDU session type, the slice type, the QoS parameter, and/or the DNN in the subscription data is transferred to the campus gateway via the user plane. When the subscription data includes a large quantity of parameters, and it is inconvenient to transmit the subscription data via the control plane solution in Embodiment 1, the user plane transmission solution in Embodiment 2 may be used.

### Embodiment 3

In this embodiment, a campus gateway accesses a 5GC as UE. In addition, the 5GC sends, to the campus gateway via a user plane of a PDU session, subscription data required for a second terminal device to access the 5GC.

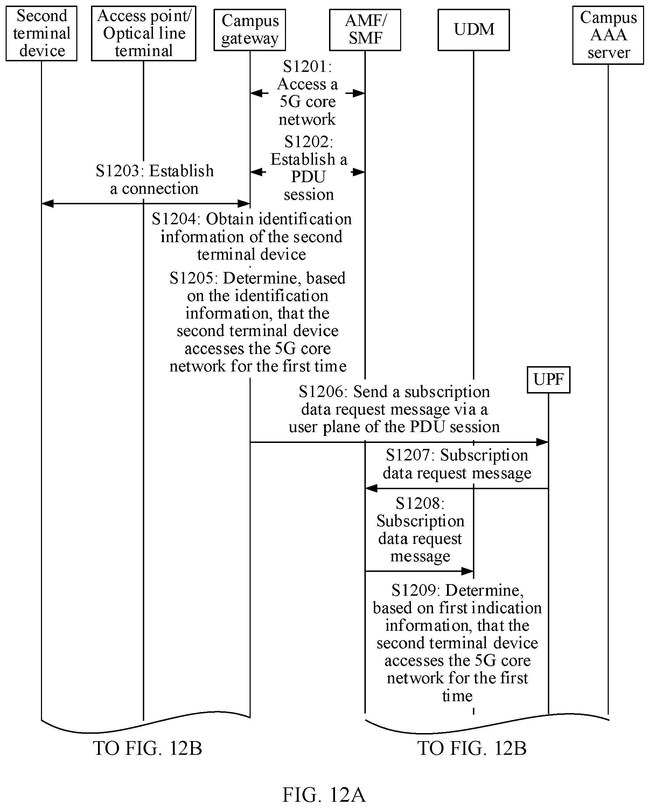

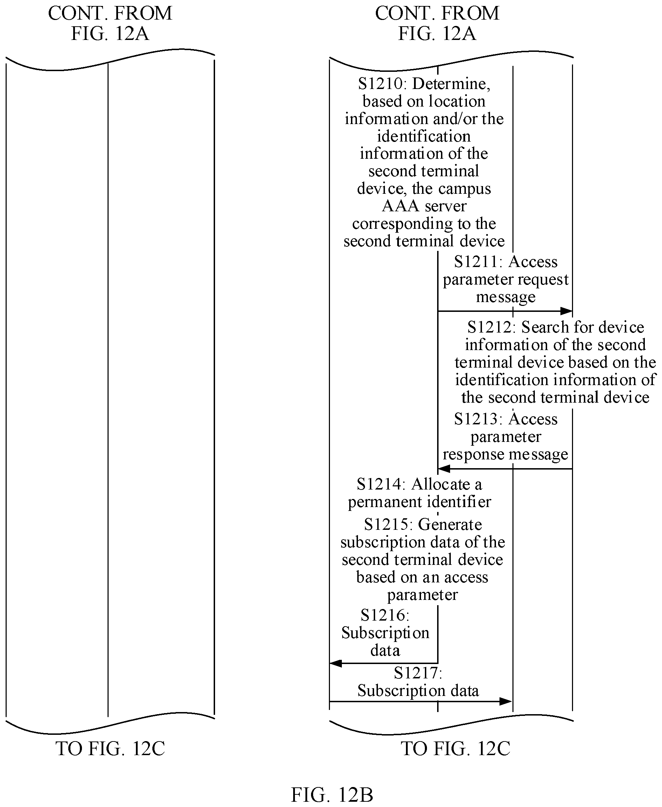

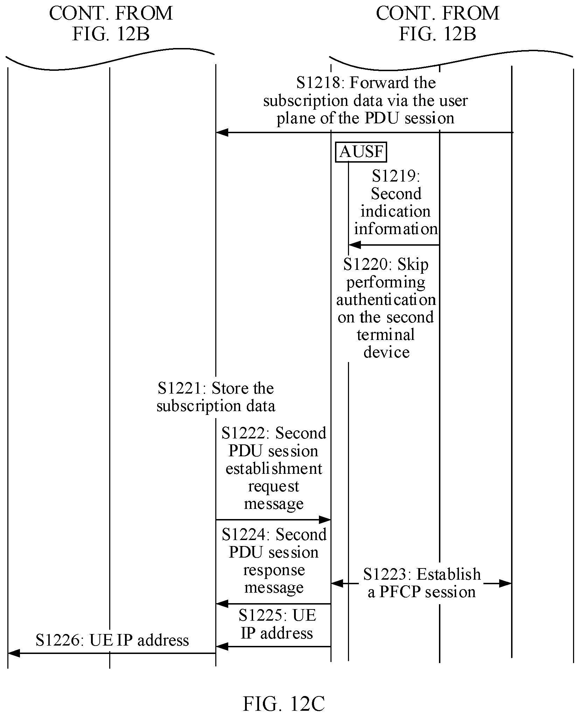

Refer to FIG. 12A to FIG. 12C. The following procedure is used in this embodiment.

S1201: The campus gateway accesses the 5GC as a terminal device.

In other words, in this embodiment, the campus gateway initiates a 5GC registration procedure as the terminal device.

S1202: The campus gateway establishes the PDU session as the terminal device.

In this embodiment, after accessing the 5GC, the campus gateway establishes the PDU session as the terminal device, to transmit the subscription data of the second terminal device.

S1203: The campus gateway establishes a connection to the second terminal device.

This step is the same as S1001 in Embodiment 1, and details are not described herein again.

A specific implementation process of S1204 and S1205 is the same as a specific implementation process of S1002 and S1003 in Embodiment 1. Details are not described herein again.

S1206: The campus gateway sends a subscription data request message to a UPF network element in the 5GC.

In this embodiment, the campus gateway sends the subscription data request message to the UPF network element in the 5GC via the user plane of the PDU session, to request the subscription data. The subscription data request message includes identification information of the second terminal device, first indication information, and location information of the second terminal device.

S1207: The UPF network element forwards the subscription data request message to an SMF network element.

In this embodiment, the UPF network element forwards the obtained subscription data request message to the SMF network element.

S1208: The SMF network element forwards the subscription data request message to a UDM network element.

In this embodiment, the SMF network element forwards the obtained subscription data request message to the UDM network element.

S1209: The UDM network element determines, based on the first indication information, that the second terminal device accesses the 5GC for the first time.

In this embodiment, the UDM network element determines, based on a first access indication and/or a subscription data request indication in the first indication information, that the second terminal device accesses the 5GC for the first time.

S1210: The UDM network element determines, based on the location information of the second terminal device and/or the identification information of the second terminal device, a campus AAA server corresponding to the second terminal device.

In this embodiment, the UDM network element determines, based on the location information of the second terminal device in the obtained subscription data request message, the campus AAA server corresponding to the second terminal device; and/or the UDM network element determines, based on service provider information included in the identification information of the second terminal device, the campus AAA server corresponding to the second terminal device.

A specific implementation process of S1211 to S1215 is the same as a specific implementation process of S1009 to S1013 in Embodiment 1. Details are not described herein again.

S1216: The UDM network element sends the subscription data to the SMF network element.

In this embodiment, the UDM network element sends the generated subscription data to the SMF network element.

S1217: The SMF network element forwards the subscription data to the UPF network element.

In this embodiment, the SMF network element forwards the obtained subscription data to the UPF network element.

S1218: The UPF network element forwards the subscription data to the campus gateway via the user plane of the PDU session.

In this embodiment, the UPF network element forwards the subscription data to the campus gateway via the user plane of the PDU session. In this case, the campus gateway obtains all content of the subscription data.

A specific implementation process of S1219 to S1226 is the same as a specific implementation process of S1017 to S1024 in Embodiment 1. Details are not described herein again.

In this embodiment, the campus gateway registers with the 5GC as independent UE. The UPF network element in the 5GC sends, to the campus gateway via the user plane of the PDU session, the subscription data required for the second terminal device to access the 5GC.

To implement functions in the method provided in embodiments of this application, a first data management network element and an access gateway may include a hardware structure and/or a software module, and implement the foregoing functions in a form of the hardware structure, the software module, or a combination of the hardware structure and the software module. Whether one of the foregoing functions is performed by using the hardware structure, the software module, or the combination of the hardware structure and the software module depends on particular application and design constraint conditions that are of the technical solutions.

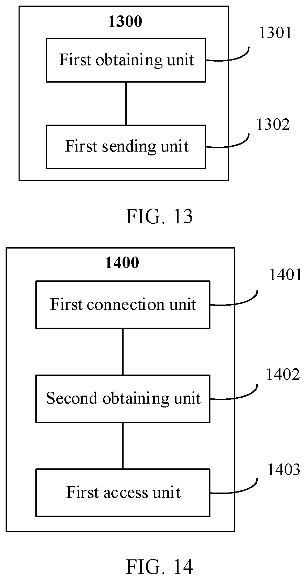

Based on a same technical concept of the method embodiments, an embodiment of this application provides a communication apparatus 1300. FIG. 13 is a schematic diagram of a structure of a communication apparatus 1300 according to an embodiment of this application. The apparatus is configured to implement the method described in the foregoing method embodiments. The communication apparatus may be an apparatus in a first data management network element or an apparatus that can be used in a matching manner with the first data management network element. In a possible implementation, the communication apparatus may include modules or units that are in one to one correspondence to methods/operations/steps/actions performed by the first data management network element in the foregoing method embodiments. The units may be hardware circuits, software, or may be implemented by a combination of the hardware circuits and the software. In a possible implementation, the apparatus includes a first obtaining unit 1301 and a first sending unit 1302.

The first obtaining unit 1301 is configured to obtain identification information of a second terminal device connected to an access gateway in a second network.

The first obtaining unit 1301 is further configured to obtain, based on the identification information, an access parameter of the second terminal device from a second data management network element corresponding to the second terminal device in the second network.

The first obtaining unit 1301 is further configured to obtain subscription data of the second terminal device based on the access parameter.

The first sending unit 1302 is configured to send the subscription data of the second terminal device to the access gateway.

In a possible implementation, the first obtaining unit 1301 is further configured to obtain first indication information. The first indication information indicates that the second terminal device accesses the first network for the first time.

In a possible implementation, the first obtaining unit 1301 is further configured to obtain second indication information. The second indication information indicates to skip performing authentication on the second terminal device.

The first sending unit 1302 is further configured to send the second indication information to an AUSF network element.

In a possible implementation, the first obtaining unit 1301 is further configured to obtain a permanent identifier of the second terminal device based on the access parameter and/or the identification information of the second terminal device.

In a possible implementation, the terminal device does not support a SIM card and a NAS function.

In a possible implementation, the apparatus 1300 further includes a first determining unit 1303.

The first obtaining unit 1301 is further configured to obtain location information of the second terminal device.

The first determining unit 1303 is configured to determine the second data management network element based on the location information.

In a possible implementation, the first obtaining unit 1301 is specifically configured to generate: the subscription data of the second terminal device based on the access parameter in a registration procedure.

In a possible implementation, the first sending unit 1302 is specifically configured to:
send the subscription data of the second terminal device to the access gateway via a user plane of a protocol data unit PDU session, where the PDU session is used for transmitting the subscription data;
send the subscription data of the second terminal device to the access gateway in the registration procedure.

In a possible implementation, the first sending unit 1302 is specifically configured to:
send, by the first data management network element, the subscription data to an SMF network element via the user plane of the protocol data unit PDU session, to enable the SMF network element to transmit the subscription data to the access gateway by using the PDU session corresponding to a first DNN, where the first DNN indicates that the PDU session is used for transmitting the subscription data.

FIG. 14 is a schematic diagram of a structure of a communication apparatus 1400 according to an embodiment of this application. The apparatus is configured to implement the method described in the foregoing method embodiments. The communication apparatus may be an apparatus in an access gateway or an apparatus that can be used in a matching manner with the access gateway. In a possible implementation, the communication apparatus may include modules or units that are in one to one correspondence to methods/operations/steps/actions performed by the access gateway in the foregoing method embodiments. The units may be hardware circuits, software, or may be implemented by a combination of the hardware circuits and the software. In a possible implementation, in the schematic diagram of the structure, the apparatus includes a first connection unit 1401, a second obtaining unit 1402, and a first access unit 1403.

The first connection unit 1401 is configured to establish a connection to a second terminal device in a second network.

The second obtaining unit 1402 is configured to obtain subscription data of the second terminal device from a first network.

The first access unit 1403 is configured to access the first network based on the subscription data.

In a possible implementation, the apparatus 1400 further includes a second determining unit 1404.

The second determining unit 1404 is configured to determine that there is no subscription data of the second terminal device locally.

In a possible implementation, the second determining unit 1404 is further configured to determine, based on identification information of the second terminal device, that the second terminal device accesses the first network for the first time.

In a possible implementation, the apparatus 1400 further includes a second sending unit 1405.

The second sending unit 1405 is configured to send a registration request message to the first network. The registration request message includes first indication information and/or second indication information. The first indication information indicates that the second terminal device accesses the first network for the first time. The second indication information indicates to skip performing authentication on the second terminal device.

In a possible implementation, the second obtaining unit 1402 is specifically configured to:
obtain, by the access gateway, the subscription data of the second terminal device from the first network in a registration procedure.

In a possible implementation, the apparatus 1400 further includes an establishment unit 1406.

The establishment unit 1406 is configured to establish a PDU session used for transmitting the subscription data.

The second obtaining unit 1402 is further configured to obtain the subscription data of the second terminal device from the first network via a user plane of the PDU session.

In a possible implementation, the second obtaining unit 1402 is further configured to: obtain a permanent identifier of the second terminal device from the first network in a registration procedure.

The second determining unit 1404 is further configured to determine the second terminal device based on the permanent identifier.

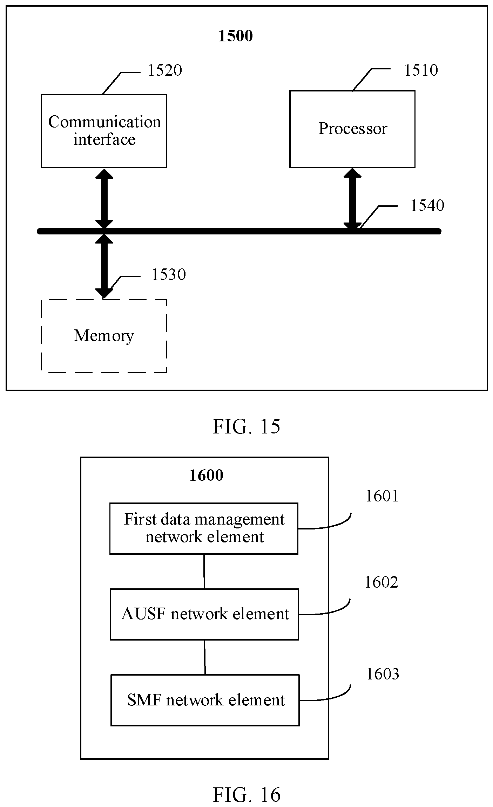

Refer to FIG. 15. An embodiment of this application further provides a communication apparatus 1500, configured to implement a function of a first data management network element or an access gateway in the foregoing method. The communication apparatus 1500 may be a chip system. In this embodiment of this application, the chip system may include a chip, or may include a chip and another discrete component. The communication apparatus 1500 includes at least one processor 1510, configured to implement the function of the first data management network element or the access gateway in the method provided in embodiments of this application. The communication apparatus 1500 may further include a communication interface 1520. In this embodiment of this application, the communication interface 1520 may be a transceiver, a circuit, a bus, a module, or another type of communication interface, and is configured to communicate with another device through a transmission medium.

The processor 1510 may perform a function performed by the first obtaining unit 1301 in the communication apparatus 1300 and a function performed by the second obtaining unit 1402 in the communication apparatus 1400. The communication interface 1520 may be configured to perform a function performed by the first sending unit 1302 in the communication apparatus 1300 and functions performed by the first connection unit 1401 and the first access unit 1403 in the communication apparatus 1400.

When the communication apparatus 1500 is configured to perform an operation performed by a first data management network element, the processor 1510 is configured to: obtain identification information of a second terminal device connected to an access gateway in a second network; obtain, based on the identification information, an access parameter of the second terminal device from a second data management network element corresponding to the second terminal device in the second network; and obtain subscription data of the second terminal device based on the access parameter, where the communication interface 1520 is configured to send the subscription data of the second terminal device to the access gateway.

When the communication apparatus 1500 is configured to perform an operation performed by an access gateway, the communication interface 1520 is configured to: establish a connection to a second terminal device in a second network, where the processor 1510 is configured to obtain subscription data of the second terminal device from a first network, and the communication interface 1520 is further configured to access the first network based on the subscription data.

The communication interface 1520 is further configured to perform other receiving or sending steps or operations related to the method of the first data management network element or the access gateway in the foregoing method embodiments. The processor 1510 may be further configured to perform another corresponding step or operation in the foregoing method embodiments other than the sending or receiving steps or operations. Details are not described herein again.

The communication apparatus 1500 may further include at least one memory 1530, configured to store program instructions and/or data. The memory 1530 is coupled to the processor 1510. A coupling in this embodiment of this application may be an indirect coupling or a communication connection between apparatuses, units, or modules in an electrical form, a mechanical form, or another form, and is used for information exchange between the apparatuses, the units, or the modules. The processor 1520 may operate in collaboration with the memory 1530. The processor 1510 may execute the program instructions stored in the memory 1530. In a possible implementation, at least one of the at least one memory may be integrated with the processor. In another possible implementation, the memory 1530 is located outside the communication apparatus 1500.

A specific connection medium between the communication interface 1520, the processor 1510, and the memory 1530 is not limited in this embodiment of this application. In this embodiment of this application, in FIG. 15, the memory 1530, the processor 1510, and the communication interface 1520 are connected through a bus 1540. The bus is represented by a bold line in FIG. 15. A connection manner between other components is merely described as an example, and is not limited thereto. The bus may be classified into an address bus, a data bus, a control bus, and the like. For ease of representation, only one bold line is used for representing the bus in FIG. 15, but this does not mean that there is only one bus or only one type of bus.

For example, the processor 1510 may be one or more central processing units (Central Processing Units, CPUs). When the processor 1510 is a CPU, the CPU may be a single-core CPU or a multi-core CPU. In this embodiment of this application, the processor 1510 may be a general-purpose processor, a digital signal processor, an application-specific integrated circuit, a field programmable gate array, another programmable logic device, a discrete gate, a transistor logic device, or a discrete hardware component, and may implement or perform the methods, steps, and logic block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

For example, the memory 1530 may include but is not limited to a non-volatile memory such as a hard disk drive (hard disk drive, HDD) or a solid-state drive (solid-state drive, SSD), a random access memory (Random Access Memory, RAM), an erasable programmable ROM (Erasable Programmable ROM, EPROM), a read-only memory (Read-Only Memory, ROM), or a compact disc read-only memory (Compact Disc Read-Only Memory, CD-ROM) The memory is any other medium that can carry or store expected program code in a form of instructions or a data structure and that can be accessed by a computer, but is not limited thereto. The memory in embodiments of this application may alternatively be a circuit or any other apparatus that can implement a storage function, and is configured to store program instructions and/or data.

Based on a same concept as the foregoing method embodiments, an embodiment of this application provides a computer-readable storage medium. The computer-readable storage medium stores a computer program; and when the computer program is executed by a processor, some or all steps of the communication method corresponding to FIG. 5 to FIG. 12 are performed.

Based on a same concept as the foregoing method embodiments, an embodiment of this application further provides a computer program product including instructions; and when the computer program product runs on a computer, the computer is enabled to perform some or all steps of the communication method corresponding to FIG. 5 to FIG. 12.

An embodiment of this application further provides a communication system 1600, including: a first data management network element 1601, configured to perform the steps performed by the first data management network element in the foregoing method embodiments;
an authentication server function AUSF network element 1602, configured to communicate with the first data management network element; and
a session management function SMF network element 1603, configured to communicate with the first data management network element.

It should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A communication method, wherein the method comprises:
obtaining, by a first data management network element in a first network, identification information of a terminal device connected to an access gateway in a second network;
obtaining, by the first data management network element based on the identification information, an access parameter of the terminal device from a second data management network element corresponding to the terminal device in the second network;
obtaining, by the first data management network element, subscription data of the terminal device based on the access parameter; and
sending, by the first data management network element, the subscription data of the terminal device to the access gateway.

2. The method according to claim 1, wherein the method further comprises:
obtaining, by the first data management network element, first indication information, wherein the first indication information indicates that the terminal device accesses the first network for the first time.

3. The method according to claim 1 or 2, wherein the method further comprises:
obtaining, by the first data management network element, second indication information, wherein the second indication information indicates to skip performing authentication on the terminal device; and
sending, by the first data management network element, the second indication information to an authentication server function AUSF network element.

4. The method according to any one of claims 1 to 3, wherein the method further comprises:
obtaining, by the first data management network element, a permanent identifier of the terminal device based on the access parameter and/or the identification information of the terminal device.

5. The method according to any one of claims 1 to 4, wherein the terminal device does not support a subscriber identity module SIM card or a non-access stratum NAS function.

6. The method according to any one of claims 1 to 5, wherein the method further comprises:
obtaining, by the first data management network element, location information of the terminal device; and
determining, by the first data management network element, the second data management network element based on the location information.

7. The method according to any one of claims 1 to 6, wherein
the obtaining, by the first data management network element, subscription data of the terminal device based on the access parameter comprises:
generating, by the first data management network element, the subscription data of the terminal device based on the access parameter in a registration procedure.

8. The method according to any one of claims 1 to 7, wherein
the sending, by the first data management network element, the subscription data of the terminal device to the access gateway comprises:
sending, by the first data management network element, the subscription data of the terminal device to the access gateway via a user plane of a protocol data unit PDU session, wherein the PDU session is used for transmitting the subscription data; or
sending, by the first data management network element, the subscription data of the terminal device to the access gateway in the registration procedure.

9. The method according to claim 8, wherein the sending, by the first data management network element, the subscription data of the terminal device to the access gateway via a user plane of a protocol data unit PDU session comprises:
sending, by the first data management network element, the subscription data to a session management function SMF network element via the user plane of the protocol data unit PDU session, to enable the SMF network element to transmit the subscription data to the access gateway by using the PDU session corresponding to a first data network name DNN, wherein the first data network name DNN indicates that the PDU session is used for transmitting the subscription data.

10. A communication method, wherein the method comprises:
establishing, by an access gateway in a second network, a connection to a terminal device in the second network;
obtaining, by the access gateway, subscription data of the terminal device from a first network; and
accessing, by the access gateway, the first network based on the subscription data.

11. The method according to claim 10, wherein the method further comprises:
determining, by the access gateway, that there is no subscription data of the terminal device locally.

12. The method according to claim 10 or 11, wherein the method further comprises:
determining, by the access gateway based on identification information of the terminal device, that the terminal device accesses the first network for the first time.

13. The method according to any one of claims 10 to 12, wherein the method further comprises:
sending, by the access gateway, a registration request message to the first network, wherein the registration request message comprises first indication information and/or second indication information, the first indication information indicates that the terminal device accesses the first network for the first time, and the second indication information indicates to skip performing authentication on the terminal device.

14. The method according to any one of claims 10 to 13, wherein
the obtaining, by the access gateway, subscription data of the terminal device from a first network comprises:
obtaining, by the access gateway, the subscription data of the terminal device from the first network in a registration procedure.

15. The method according to any one of claims 10 to 13, wherein the method further comprises:
establishing, by the access gateway, a protocol data unit PDU session used for transmitting the subscription data; and
the obtaining, by the access gateway, subscription data of the terminal device from a first network comprises:
obtaining, by the access gateway, the subscription data of the terminal device from the first network via a user plane of the PDU session.

16. The method according to claim 15, wherein the obtaining, by the access gateway, the subscription data of the terminal device from the first network in a registration procedure comprises:
obtaining, by the access gateway, a permanent identifier of the terminal device from the first network in the registration procedure; and
the method further comprises:
determining, by the access gateway, the terminal device based on the permanent identifier.

17. A communication apparatus, comprising at least one processor, wherein the processor is configured to execute a program stored in a memory; and when the program is executed, the apparatus is enabled to perform
the method according to any one of claims 1 to 9; or
the method according to any one of claims 10 to 16.

18. A computer program product comprising instructions, wherein when the computer program product runs on a computer, the computer is enabled to perform
the method according to any one of claims 1 to 9, or
the method according to any one of claims 10 to 16.

19. A computer-readable storage medium, wherein the computer-readable storage medium stores a computer program; and when the computer program is executed by a processor,
the method according to any one of claims 1 to 9 or
the method according to any one of claims 10 to 16 is performed.

20. A communication system, wherein the communication system comprises:
a first data management network element, configured to perform the method according to any one of claims 1 to 9; and
a session management function SMF network element, configured to communicate with the first data management network element.
